# EUROPEAN PATENT SPECIFICATION

(11) **EP 4 238 545 B1**
(45) Date of publication and mention of the grant of the patent: **28.01.2026**
(21) Application number: 22159895.6
(22) Date of filing: 03.03.2022
(51) Int. Cl.: A61H 33/00

(54) **CONTROL BOX OF MASSAGE POOL AND MASSAGE POOL**
STEUERKASTEN FÜR MASSAGEBECKEN UND MASSAGEBECKEN
BOÎTE DE COMMANDE DE BASSIN DE MASSAGE ET BASSIN DE MASSAGE

(43) Date of publication of application: 06.09.2023
(73) Proprietor: Bestway Inflatables & Material Corp., Shanghai 201812 (CN)
(72) Inventor: HUANG, Shuiyong, Shanghai, 201812 (CN)
(74) Representative: Inchingalo, Simona

(56) References cited:
- US-A- 5 899 231
- US-A1- 2004 045 613
- US-A1- 2011 114 341
- US-A1- 2014 277 777
- US-B2- 9 856 667

## Description

### CROSS-REFERENCE TO RELATED APPLICATION(S)

This Application claims priority from Chinese Application CN202120489220.0 filed on March 8, 2021.

### BACKGROUND

### 1. Technical Field

The present invention discloses apparatuses and methods consistent with example embodiments which relate to massage pools, and more specifically to a control box of a massage pool and a massage pool comprising the control box.

### 2. Background Art

A massage pool may be controlled by a control box used to implement any of various water circulation functions. The water circulation functions may include water filtering functions and water massage functions. A water conduit for filtration of water in a water circulation system may be independent from a water conduit for water in a water massage system.
A diverter valve that can be used in pool and spa is disclosed in document US 2004/045613. This diverted valve comprises an external diverter handle that can be turned to cause the movement of an internal closure member that can open or close one path. Another valve that has three or more ports in which water is drawn from a source and diverted away from a water filtration system and directed towards a hose used against fire is disclosed in document US 2011/0114341.

### SUMMARY OF THE INVENTION

The present invention is directed to a control box according to claim 1 and a massage pool according to claim 10. Additional features and embodiments of the invention are defined in the dependent claims.

### SUMMARY OF THE DISCLOSURE

Example embodiments may address at least the above problems and/or disadvantages and other disadvantages not described above. Also, example embodiments are not required to overcome the disadvantages described above, and may not overcome any of the problems described above.

One or more example embodiments may provide a control box of a massage pool and a massage pool comprising the control box.

According to an aspect of an example embodiment, a control box of a massage pool, comprises: a filtering water pump unit comprising: a filtering pump body, a filtering water inlet pipe connected between the massage pool and the filtering pump body, and a filtering output pipe; a massage water pump unit, the massage water pump unit comprising: a massage pump body , a massage inlet pipe connected between the massage pool and the massage pump body, and a massage output pipe; a water outlet pipe configured to output water to the massage pool; a three-way connecting pipe fitting comprising: a first branch pipe having a distal end connected to the filtering output pipe, a second branch pipe having a distal end connected to the massage output pipe, and a third branch pipe having a distal end connected to the water outlet pipe; and at least one valve configured to alternately open and close a first flow path from the filtering output pipe through the first branch pipe.

The at least one valve may be a first swing check one-way valve comprising a first pivot shaft, a first valve clack pivotable around the first pivot shaft, and a first valve seat.

The at least one valve may be disposed in at least one of the filtering output pipe, the massage output pipe, and the three-way connecting pipe fitting; and the at least one valve may be configured to alternately open the first flow path and open a second flow path from the massage output pipe through the second branch pipe.

The at least one valve may comprise: a first swing check one-way valve disposed at a connection between the filtering output pipe and the first branch pipe; and a second swing check one-way valve disposed at a connection between the massage output pipe and the second branch pipe.

The first swing check one-way valve may be disposed at a connection between the filtering output pipe and the first branch pipe.

The at least one valve may be a lift valve comprising: a valve stem, a valve clack capable of reciprocating along the valve stem, and a valve seat.

A height at which the water outlet pipe is disposed may be greater than or equal to heights at which the filtering output pipe, the massage output pipe, and the three-way connecting pipe fitting are disposed.

The control box may further comprise an air pump unit comprising an air pump body and an air pump output pipe, the air pump output pipe configured to be connected to an air inlet conduit of the massage pool.

The control box may further comprise a heater connected to the filtering output pipe.

According to an aspect of another example embodiment, a massage pool may be provided comprising the control box as described above.

According to an aspect of another example embodiment, a control box of a massage pool is provided, the control box comprising: a filtering water pump unit comprising a filtering inlet pipe, a filtering pump body, and a filtering output pipe; a massage water pump unit comprising a massage inlet pipe, a massage pump body, and a massage output pipe; a three-way connecting pipe fitting; a water outlet pipe; and at least one valve; wherein the three-way connecting pipe fitting comprises: a first branch pipe having a distal end connected to the filtering output pipe and a proximal end connected to a juncture of the three-way connecting pipe fitting; a second branch pipe having a distal end connected to the massage output pipe and a proximal end connected to the juncture; and a third branch pipe having a distal end connected to the water outlet pipe and a proximal end connected to the juncture; wherein the at least one valve is configured to alternately open and close a first flow path comprising the filtering output pipe, the first branch pipe, and the juncture.

### BRIEF DESCRIPTION OF THE DRAWINGS

The above and/or other aspects will become apparent and more readily appreciated from the following description of example embodiments, taken in conjunction with the accompanying drawings in which:
FIG. 1 is a schematic diagram of a massage pool and a control box according to an example embodiment;
FIG. 2 is a partial schematic diagram of a control box according to an example embodiment;
FIG. 3 is a schematic sectional view of the control box of FIG. 2 in a filtering mode;
FIG. 4 is a partial enlarged view of part A of FIG. 3;
FIG. 5 is a partial schematic structural diagram of a lift valve of FIG. 3;
FIG. 6 is a schematic sectional view of the control box of FIG. 2 in a massage mode;
FIG. 7 is a partial enlarged view of part B of FIG. 6;
FIG. 8 is a partial schematic diagram of a control box according to another exemplary embodiment;
FIG. 9 is a schematic sectional view of a control box in a filtering mode according to another example embodiment;
FIG. 10 is a partial enlarged view of part C of FIG. 9;
FIG. 11 is a partial schematic structural diagram of a first swing check one-way valve of FIG. 9;
FIG. 12 is a schematic sectional view of the control box of FIG. 9 in a massage mode; and
FIG. 13 is a partial enlarged view of part D of FIG. 12.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different components may refer to a component by different names - this document does not intend to distinguish between components that differ in name but not function.

Matters of these example embodiments that are obvious to those of ordinary skill in the technical field to which these example embodiments pertain may not be described here in detail.

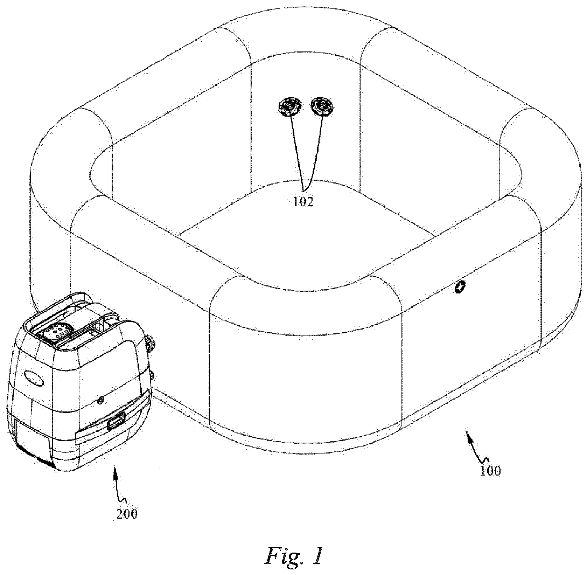

FIG. 1 illustrates a schematic diagram of a massage pool 100 and a control box 200 according to an example embodiment. The control box 200 is connected to the massage pool 100. One or more massage nozzles 102 are provided on an inner wall of the massage pool 100.

As discussed herein, an inlet flow direction and an outlet flow direction of water represented by "inlet" in "a filtering water inlet pipe" and "a massage water inlet pipe" and "outlet" in "a water outlet pipe" are described with respect to the control box. That is, a flow direction from the massage pool 100 to the control box is described as an "inlet" direction, and a flow direction from the control box 200 to the massage pool 100 is described as an "outlet" direction.

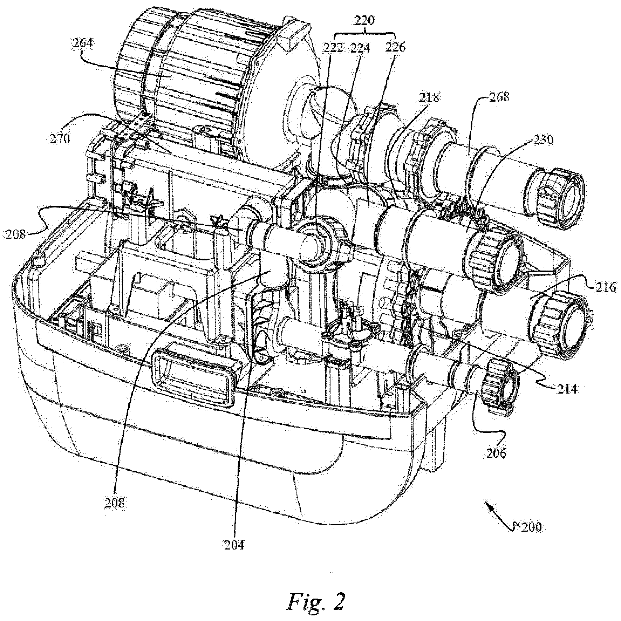

With reference to FIG. 2, when the control box 200 is set to a filtering mode, a filtering water pump unit in the control box 200 operates, while a massage water pump unit in the control box does not operate. Water in the massage pool 100 flows from the massage pool 100 into a filtering water pump body 204 through a filtering water inlet pipe 206; is pumped by the filtering water pump body 204 to a filtering output pipe 208; and then flows back to the massage pool 100 via a water outlet pipe 230. A first flow path is defined as starting at an end of the filtering output pipe 208 close to the filtering water pump body 204 and ending at a connection between a first branch pipe 222 and a second branch pipe 224 or a third branch pipe 226.

When the control box 200 is set to a massage mode, the massage water pump unit in the control box 200 operates, and the filtering water pump unit in the control box does not operate. Water in the massage pool 100 flows from the massage pool 100 into a massage water pump body 214 through a massage water inlet pipe 216; is pumped by the massage water pump body 214 to a massage outlet pipe 218, then flows back to a water conduit provided in the massage pool 100 via the water outlet pipe 230; and is ejected from the massage nozzle 102. A water conduit path is defined as starting at an end of the massage output pipe 218, close to the massage water pump body 214, and ending at a connection between the second branch pipe 224 and the third branch pipe 226.

It should be noted that in the filtering mode and massage mode described above, water passes through a third branch pipe 226 after being pumped from the filtering water pump body 204 or the massage water pump body 214, and then flows back to the massage pool 100 via the water outlet pipe 230 connected to the third branch pipe 226. In one or more example embodiments, because a water conduit in the filtering water pump unit is in communication with a water conduit in the massage water pump unit, to avoid an undesired flow splitting of water caused by water conduits in communication in various running modes, a valve may be provided inside the control box 200. The valve may be used for guiding a flow direction of water.

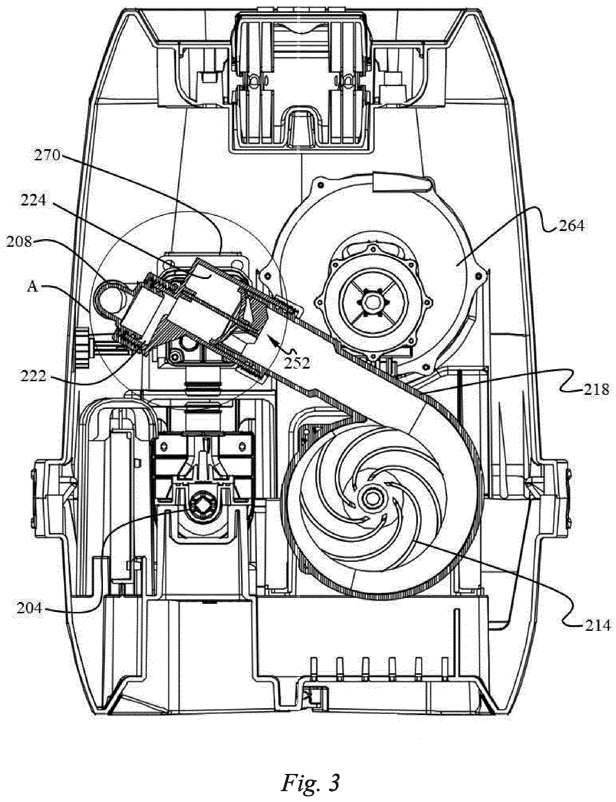

With reference to FIGs. 2 and 3, a partial schematic diagram of a control box 200 according to an example embodiment is shown. FIG. 2 shows a filtering water pump unit, a massage water pump unit, a three-way connecting pipe fitting 220, a water outlet pipe 230, an air pump body 264, a positive temperature coefficient (PTC) heater 270, and other elements described below. In FIG. 2, the filtering water pump unit comprises: a filtering water inlet pipe 206, a filtering water pump body 204 connected to the filtering water inlet pipe 206, and a filtering output pipe 208 connected to the filtering water pump body 204. The filtering water inlet pipe 206 extends in a horizontal direction outside a housing of the control box. The massage water pump unit comprises: a massage water inlet pipe 216, a massage water pump body 214 connected to the massage water inlet pipe 216, and a massage output pipe 218 connected to the massage water pump body 214. The massage water inlet pipe 216 extends in the horizontal direction outside the housing of the control box. The three-way connecting pipe fitting 220 comprises: a first branch pipe 222 connected to the filtering output pipe 208; a second branch pipe 224 connected to the massage output pipe 218; and a third branch pipe 226 connected to the water outlet pipe 230. Thus, the first branch pipe 222 has a distal end connected to the filtering output pipe 208, and a proximal end connected to a juncture of the second branch pipe 224, where the third branch pipe 226 is connected to the second branch pipe 224. The second branch pipe 224 has a distal end connected to the massage output pipe 218, and a juncture at a proximal end, where the third branch pipe 226 and the first branch pipe 222 are connected to the second branch pipe 224. The third branch pipe 226 has a distal end connected to the water outlet pipe and a proximal end connected to the juncture in the second branch pipe 224. In the example embodiment shown in FIG. 2, the first branch pipe 222 is staggered downward from the second branch pipe 224, and the third branch pipe 226 is connected to the second branch pipe 224. This enables the water outlet pipe 230 to be disposed above the filtering output pipe 208 and the massage output pipe 218. The water outlet pipe 230 is used for connecting to a water inlet conduit of the massage pool. One end of the water outlet pipe 230 is joined to the third branch pipe 226, and the other end extends in the horizontal direction outside the housing of the control box. The air pump unit comprises an air pump output pipe 268, extending in the horizontal direction, and an air pump body 264. The PTC heater 270 is disposed in a substantially horizontal position and is connected to the filtering output pipe 208.

As discussed above, the first branch pipe 222 of the three-way connecting pipe fitting 220 in FIG. 2 is staggered downward from the second branch pipe 224. This enables the third branch pipe 226, connected to the second branch pipe 224 at the juncture in the second branch pipe 224, to be disposed at a height greater than or equal to heights at which the first branch pipe 222 and the second branch pipe 224 are disposed. It is further arranged that the water outlet pipe 230 is disposed at a height that is greater than or equal to heights at which the filtering output pipe 208, the massage output pipe 218, and the three-way connecting pipe fitting 220 are disposed. That is, none of the heights at which other water conduits in the control box are disposed is greater than the height at which the water outlet pipe 230 is disposed. This example arrangement enables the control box to have a compact structure and an appropriate layout, and may aid in preventing air from remaining in a water conduit of the control box 200 due to low density. In addition, air may further be prevented from remaining at the PTC heater to cause the PTC heater to fail to detect water temperature as expected.

In one or more example embodiments, the foregoing air pump unit may be omitted from the control box.

In one or more example embodiments, the foregoing PTC heater may be omitted from the control box. In this case, the filtering output pipe 208 may be directly connected to the first branch pipe 222 of the three-way connecting pipe fitting 220 and the filtering water pump body 204.

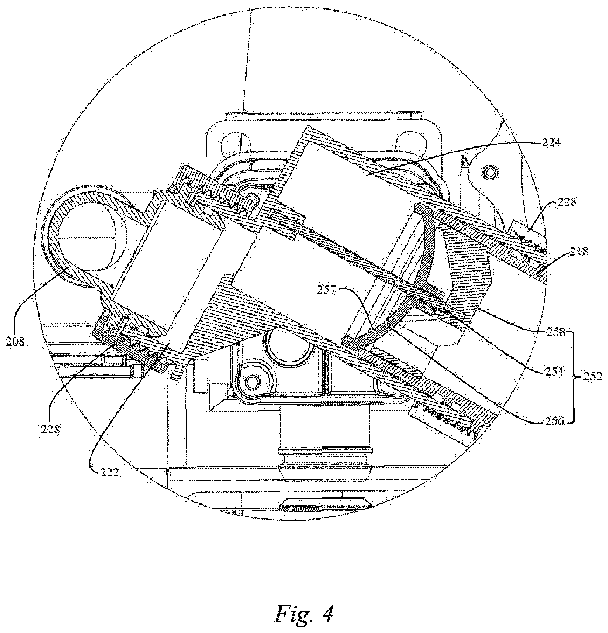

With reference to FIG. 3 to FIG. 7, FIG. 3 and FIG. 4 show a control box 200 in a filtering mode according to an example embodiment. With reference to FIG. 3 and FIG. 4, the filtering output pipe 208 and the massage output pipe 218 are respectively connected to the first branch pipe 222 and the second branch pipe 224 of the three-way connecting pipe fitting 220 by detachable threaded connecting members 228. A lift valve 252 is provided at the juncture of the second branch pipe 224, where the third branch pipe 226 is connected to the second branch pipe 224. The lift valve 252 is configured to alternately allow water flow from the first branch pipe 222 into the juncture of the second branch pipe 224 and into the third branch pipe 226, or to allow water flow from the massage output pipe 218 into the distal end of the second branch pipe 224 into the juncture of the second branch pipe 224 and into the third branch pipe 226. The lift valve 252 comprises: a valve stem 254, a second valve clack 256 capable of reciprocating along the valve stem 254, and a second valve seat 258 for fixing the valve stem 254. In the filtering mode, the filtering water pump unit is in operation, and water from the massage pool 100 is pumped by the filtering water pump body 204, sequentially flows through the filtering output pipe 208 and the first branch pipe 222, and applies a force to a first surface 257 of the second valve clack 256. This force enables the second valve clack 256 to fall along the valve stem 254 to the second valve seat 258, to open a first flow path and at the same time to close a second flow path. Water from the first branch pipe 222 flows to the juncture in the second branch pipe 224, sequentially flows through the third branch pipe 226 and the water outlet pipe 230, and finally flows back into the massage pool 100.

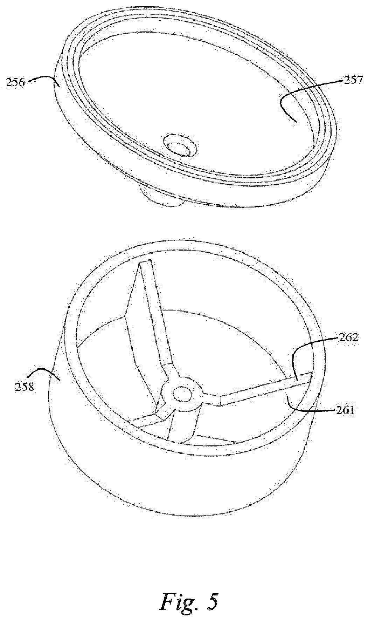

As shown in FIG. 5, in an example embodiment, the second valve clack 256 has an arc-shaped surface enabling the first surface 257 to form a concave surface toward the second valve seat 258. The second valve seat 258 has a hollow cylindrical structure with three uniformly distributed spokes 261. End surfaces 262 of the three spokes 261 of the second valve seat 258 are inwardly concave. That is, the second valve seat 258 has a concave surface. The concave surface can adapt to the second valve clack 256.

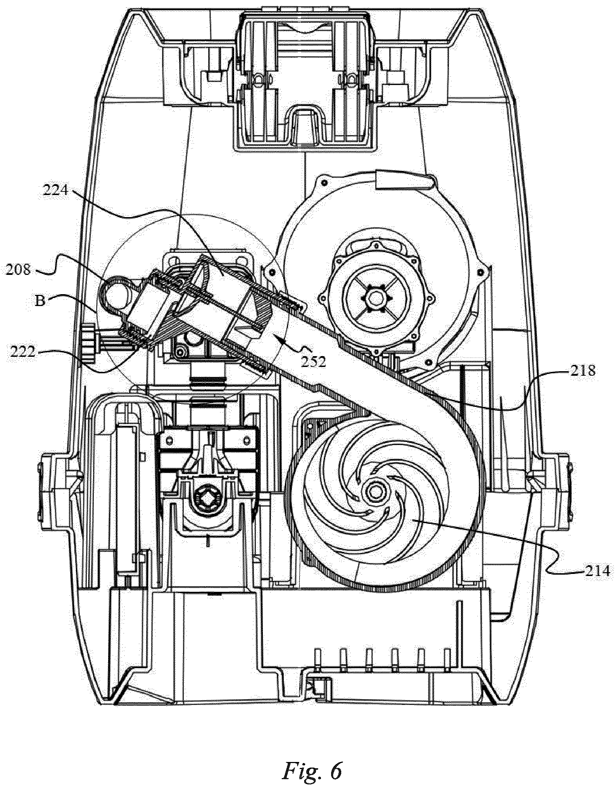

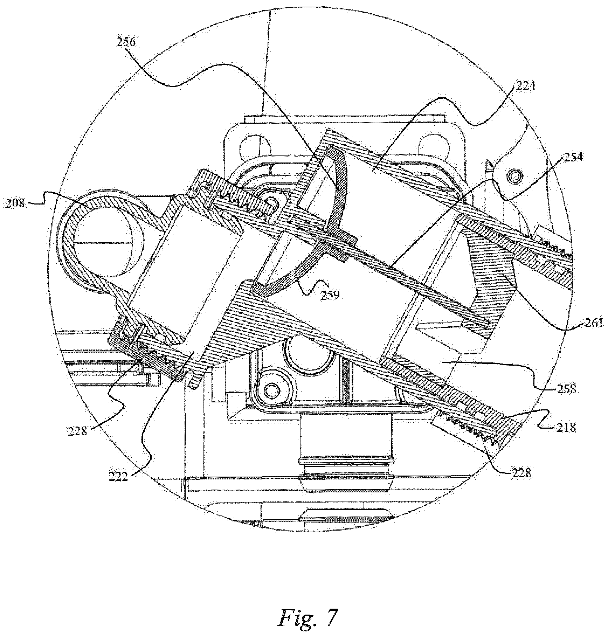

FIG. 6 and FIG. 7 show a control box in a massage mode according to an example embodiment. In the massage mode, the massage water pump unit is in operation, and water from the massage pool 100 is pumped by the massage water pump body 214 into the massage output pipe 218, and applies a force to a second surface 259 of the second valve clack 256. This force enables the second valve clack 256 to rise along the valve stem 254 to a joint between the first branch pipe 222 and the second branch pipe 224, to open the second flow path, and at the same time, close the first flow path. Water from the massage output pipe 218 flows into the juncture in the second branch pipe 224, sequentially flows through the third branch pipe 226 and the water outlet pipe 230, then flows to a water conduit provided in the massage pool 100, and is finally ejected from the massage nozzle 102.

With the foregoing arrangement, the lift valve 252 alternatively opens the first flow path for the filtered water or the second flow path for the massage water.

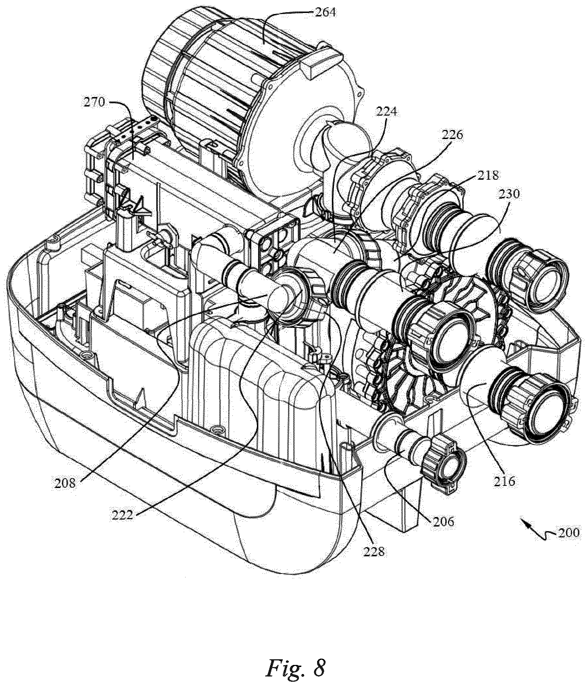

FIG. 8 shows a partial schematic diagram of a control box according to another example embodiment. Elements which are the same as those discussed with reference to FIG. 2 are not repeatedly discussed here. In FIG. 8, the first branch pipe 222 of the three-way connecting pipe fitting 222 is staggered down from the third branch pipe 226, to enable a height at which the third branch pipe 226, connected to the juncture of the second branch pipe 224, is disposed to be greater than or equal to heights at which the first branch pipe 222 and the second branch pipe 224 are disposed. A height at which the water outlet pipe 230 is disposed is greater than or equal to heights at which the filtering output pipe 208, the massage output pipe 218, and the three-way connecting pipe fitting 220 are disposed. That is, none of the heights at which other water conduits in the control box are disposed are greater than the height at which the water outlet pipe 230 is disposed. The filtering output pipe 208 and the massage output pipe 218 are respectively connected to the first branch pipe 222 and the second branch pipe 224 by the detachable threaded connecting members 228.

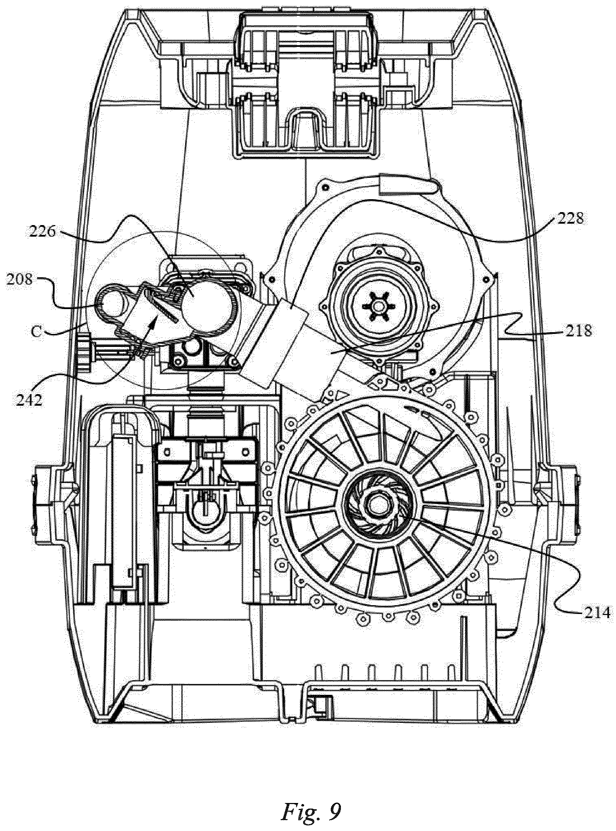

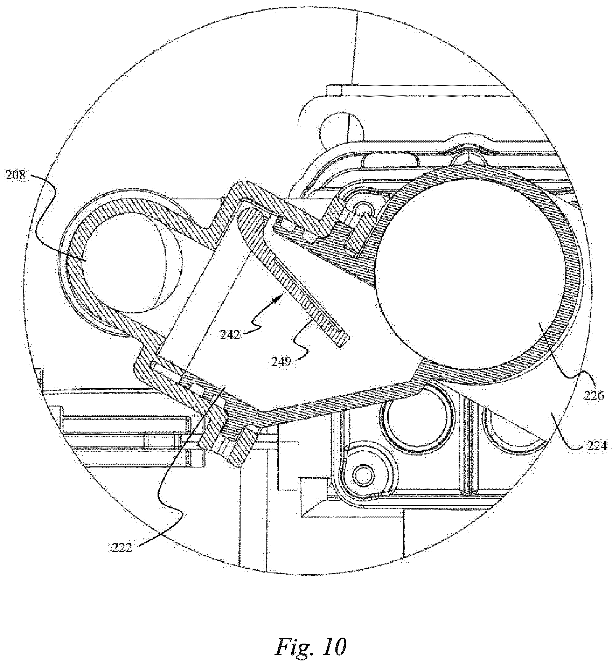

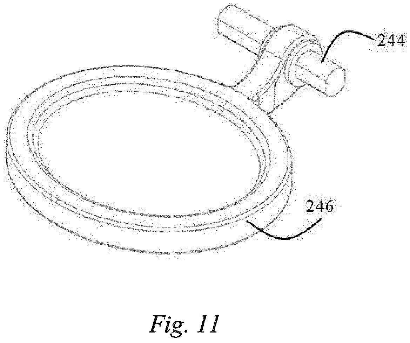

With reference to FIG. 9 to FIG. 13, FIG. 9 and FIG. 10 show a control box in a filtering mode according to another example embodiment. With reference to FIG. 9 and FIG. 10, the filtering output pipe 208 is connected to the first branch pipe 222 in a pluggable manner. The massage output pipe 218 is connected to the second branch pipe 224 by the detachable threaded connecting member 228. A first swing check one-way valve 242 is provided at the distal end of the first branch pipe 222, at the connection between the first branch pipe 222 and the filtering output pipe 208. As illustrated, the first swing check one-way valve 242 is arranged at the filtering output pipe 208. With reference to FIG. 10 and FIG. 11, the first swing check one-way valve 242 comprises: a first pivot shaft 244, a first valve clack 246 pivotable around the first pivot shaft 244, and a first valve seat. The first valve clack 246 is adapted to the filtering output pipe 208, and is pivotably connected to the first pivot shaft 244. The first pivot shaft 244 is pivotably or fixedly connected to the filtering output pipe 208 by the first valve seat (not shown). In the filtering mode, the filtering water pump unit is in operation, and water from the massage pool 100 is pumped by the filtering water pump body 204 to the filtering output pipe 208, and applies a force to a third surface 249 of the first valve clack 246. This force enables the first valve clack 246 to pivot around the first pivot shaft 244 and to be open, to open the first flow path. Water from the filtering output pipe 208 sequentially flows into the first branch pipe 222, the third branch pipe 226, and the water outlet pipe 230, and finally flows back to the massage pool 100. It should also be noted that some water is diverted by the third branch pipe 226 to flow into the second branch pipe 224, and continues to flow to the massage output pipe 218. That is, some of the water is diverted onto the second flow path to flow to the massage output pipe 218.

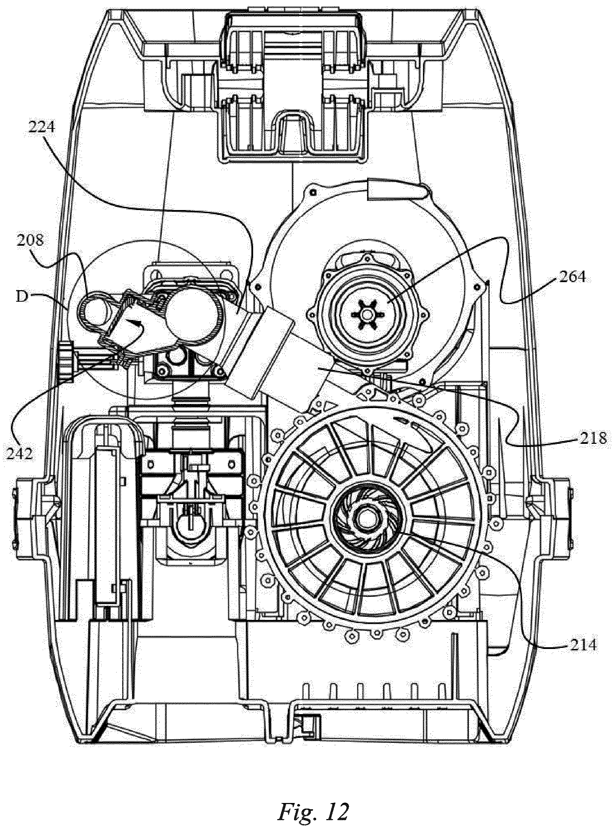

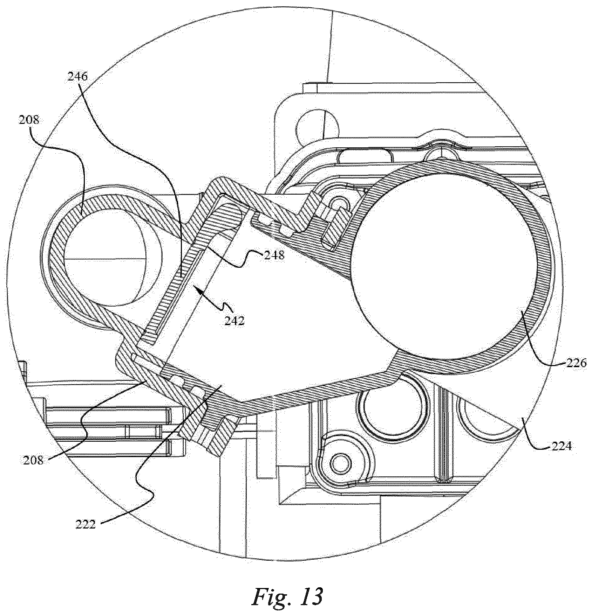

FIG. 12 and FIG. 13 are schematic sectional views of the control box in FIG. 9 in a massage mode. In the massage mode, the massage water pump unit is in operation, and water from the massage pool 100 is pumped by the massage water pump body 214 to the massage output pipe 218, sequentially flows through the second branch pipe 224, the third branch pipe 226, and the water outlet pipe 230, flows to a water conduit provided in the massage pool 100, and is finally ejected from the massage nozzle 102. Some of the water flowing to the second branch pipe 224 is diverted to flow to the first branch pipe 222, and applies a force to a fourth surface 248 of the first valve clack 246 at a connection between the first branch pipe 222 and the filtering output pipe 208. This force enables the first valve clack 246 to pivot in an opposite direction around the first pivot shaft 244 to be closed, and to close the first flow path.

With the foregoing arrangement, the first swing check one-way valve 242 may open or close the first flow path.

According to one or more example embodiments, the first swing check one-way valve may be disposed at the connection between the first branch pipe and the filtering output pipe and may be arranged at the first branch pipe. According to one or more other example embodiments, the first swing check one-way valve may be disposed at the filtering output pipe along the first flow path.

According to one or more example embodiments, the first swing check one-way valve may be disposed as an auto-reset swing check one-way valve. In other words, when no water applies a force to the first swing check one-way valve, the first swing check one-way valve may automatically close to close the first flow path.

According to one or more example embodiments, to avoid unnecessary flow diversion of water in the filtering mode into the massage output pipe 218, while the first swing check one-way valve 242 is provided at a connection between the first branch pipe 222 and the filtering output pipe 208, a second swing check one-way valve may be further provided at the massage output pipe. Similar to the structure of the first swing check one-way valve 242, the second swing check one-way valve may include a second pivot shaft, a third valve clack pivotable around the second pivot shaft, and a third valve seat. The third valve clack may be adapted to the massage output pipe 218, and be pivotably connected to the second pivot shaft. The second pivot shaft may be pivotably or fixedly connected to the massage output pipe by the third valve seat.

According to one or more example embodiments, the filtering water pump unit is in operation in the filtering mode, and water from the massage pool 100 is pumped by the filtering water pump body 204 to the filtering output pipe 208, and the water applies a force to the third surface 249 of the first valve clack 246. This force enables the first valve clack 246 to pivot around the first pivot shaft 244 to be open, to open the first flow path. Water from the filtering output pipe 208 sequentially flows through the first branch pipe 222, the third branch pipe 226, and the water outlet pipe 230, and finally flows back to the massage pool 100. It should also be noted that, meanwhile, some water may be undesirably diverted, via the third branch pipe 226, along the second flow path to flow to the massage output pipe 218. In this case, water flows through the second swing check one-way valve, and applies a force to a sixth surface of the third valve clack of the second swing check one-way valve, to enable the third valve clack to pivot in an opposite direction around the second pivot shaft to be closed, to close the second flow path. In other words, in the filtering mode in this example embodiment, the first valve clack 246 is opened to open the first flow path, and at the same time the third valve clack is closed to close the second flow path.

Similarly, in the massage mode in one or more example embodiments, water flows through the second swing check one-way valve, and applies a force to a fifth surface of the third valve clack of the second swing check one-way valve, to enable the third valve clack to pivot around the second pivot shaft to be open, to open the second flow path. Water from the massage output pipe 208 sequentially flows through the second branch pipe, the third branch pipe, and the water outlet pipe, then flows to the water conduit provided in the massage pool 100, and is finally ejected from the massage nozzle 102. It should also be noted that, meanwhile, some water is diverted, via the third branch pipe, along the first flow path to flow to the filtering output pipe. In this case, water flows through the first swing check one-way valve, and applies a force to a fourth surface of the first valve clack, to enable the first valve clack to pivot in an opposite direction around the first pivot shaft to be closed, to close the first flow path. In other words, in the massage mode in this example embodiment, the third valve clack is opened to open the second flow path, and at the same time the first valve clack is closed to close the first flow path.

With the foregoing example arrangement, the first swing check one-way valve and the second swing check one-way valve cooperate with each other to alternatively open the first flow path or the second flow path.

According to one or more example embodiments, the first swing check one-way valve may be disposed along the first flow path. For example, the first swing check one-way valve may be disposed at the filtering output pipe. Similarly, the second swing check one-way valve may be disposed along the second flow path. For example, the second swing check one-way valve may be disposed at the second branch pipe.

According to one or more example embodiments, the second swing check one-way valve may be disposed as an auto-reset swing check one-way valve. In other words, when no water applies a force to the second swing check one-way valve, the second swing check one-way valve is automatically closed to close the second flow path.

It may be understood that the example embodiments described herein may be considered in a descriptive sense only and not for purposes of limitation. Descriptions of features or aspects within each example embodiment may be considered as available for other similar features or aspects in other example embodiments. The present invention is only limited by the scope of the appended claims.

## Claims

1. A control box of a massage pool, the control box comprising:
a filtering water pump unit comprising: a filtering water pump body (204) into which water from a massage pool (100) flows, a filtering water inlet pipe (206) connected between the massage pool (100) and the filtering water pump body (204) and through which water flows from the massage pool (100) into the filtering water pump body (204), and a filtering output pipe (208) to which water is pumped by the filtering water pump body (204) to flow back to the massage pool (100) through a water outlet pipe (230);
a massage water pump unit comprising: a massage water pump body (214) into which water from the massage pool (100) flows, a massage water inlet pipe (216) connected between the massage pool (100) and the massage water pump body (214) and through which water flows from the massage pool (100) into the massage water pump body (214), and a massage output pipe (218) to which water is pumped by the massage water pump body (214) to flow back to the massage pool (100) through the water outlet pipe (230);
said water outlet pipe (230) being configured to output water from the filtering water pump unit or from the massage water pump unit to the massage pool (100);
a three-way connecting pipe fitting (220) comprising: a first branch pipe (222) having a distal end connected to the filtering output pipe (208) and a proximal end connected to a juncture of the three-way connecting pipe fitting (220), a second branch pipe (224) having a distal end connected to the massage output pipe (218) and a proximal end connected to the juncture, and a third branch pipe (226) having a distal end connected to the water outlet pipe (230) and a proximal end connected to the juncture; and
at least one valve (242, 252) placed inside the three-way connecting pipe fitting (220) and configured to alternately open and close a first flow path from the filtering output pipe (208) through the first branch pipe (222) and the juncture,
wherein said at least one valve (242, 252) is configured to switch from one position to another pushed by the force of the water flowing from the control box (200) to the massage pool (100) and pumped from the filtering water pump unit or from the massage water pump unit depending on whether the control box is set respectively to a filtering mode or to a massage mode.

2. The control box according to claim 1, wherein the at least one valve is a first swing check one-way valve (242) comprising: a first pivot shaft (244), a first valve clack (246) pivotable around the first pivot shaft (244), and a first valve seat.

3. The control box according to claim 1, wherein:
the at least one valve is disposed in at least one of the filtering output pipe (208), the massage output pipe (218), and the three-way connecting pipe fitting (220); and
the at least one valve is configured to alternately open the first flow path and open a second flow path from the massage output pipe (218) through the second branch pipe (224).

4. The control box according to claim 3, wherein the at least one valve comprises:
a first swing check one-way valve (242) disposed at a connection between the filtering output pipe (208) and the first branch pipe (222): and
a second swing check one-way valve disposed at a connection between the massage output pipe (218) and the second branch pipe (224).

5. The control box according to claim 2, wherein the first swing check one-way valve (242) is disposed at a connection between the filtering output pipe (208) and the first branch pipe (222).

6. The control box according to claim 3, wherein the at least one valve is a lift valve (252) comprising: a valve stem (254), a valve clack (256) capable of reciprocating along the valve stem (254), and a valve seat (258).

7. The control box according to claim 1, wherein a height at which the water outlet pipe (230) is disposed is greater than or equal to heights at which the filtering output pipe (208), the massage output pipe (218), and the three-way connecting pipe fitting (220) are disposed.

8. The control box according to claim 1, wherein the control box (200) further comprises an air pump unit comprising an air pump body (264) and an air pump output pipe (268), the air pump output pipe (268) configured to be connected to an air inlet conduit of the massage pool (100).

9. The control box according to claim 1, further comprising a heater (270) connected to the filtering output pipe (208).

10. A massage pool, comprising the control box according to one of claims 1 to 9.

## Patentansprüche

1. Steuerkasten für ein Massagebecken, wobei der Steuerkasten Folgendes umfasst:
eine Filterwasserpumpeneinheit, umfassend: einen Filterwasserpumpenkörper (204), in den Wasser aus einem Massagebecken (100) strömt, ein Filterwassereinlassrohr (206), das zwischen dem Massagebecken (100) und dem Filterwasserpumpenkörper (204) verbunden ist und durch das Wasser aus dem Massagebecken (100) in den Filterwasserpumpenkörper (204) strömt, und ein Filterausgangsrohr (208), zu dem durch den Filterwasserpumpenkörper (204) Wasser gepumpt wird, um durch ein Wasserauslassrohr (230) zurück zum Massagebecken (100) zu strömen;
eine Massagewasserpumpeneinheit, umfassend: einen Massagewasserpumpenkörper (214), in den Wasser aus dem Massagebecken (100) strömt, ein Massagewassereinlassrohr (216), das zwischen dem Massagebecken (100) und dem Massagewasserpumpenkörper (214) verbunden ist und durch das Wasser aus dem Massagebecken (100) in den Massagewasserpumpenkörper (214) strömt, und ein Massageausgangsrohr (218), zu dem durch den Massagewasserpumpenkörper (214) Wasser gepumpt wird, um durch das Wasserauslassrohr (230) zurück zum Massagebecken (100) zu strömen,
wobei das Wasserauslassrohr (230) ausgelegt ist, um Wasser aus der Filterwasserpumpeneinheit oder aus der Massagewasserpumpeneinheit an das Massagebecken (100) auszugeben;
eine Drei-Wege-Verbindungsrohrverschraubung (220), umfassend: ein erstes Abzweigrohr (222), aufweisend ein distales Ende, das mit dem Filterausgangsrohr (208) verbunden ist, und ein proximales Ende, das mit einer Verbindungsstelle der Drei-Wege-Verbindungsrohrverschraubung (220) verbunden ist, ein zweites Abzweigrohr (224), aufweisend ein distales Ende, das mit dem Massageausgangsrohr (218) verbunden ist, und ein proximales Ende, das mit der Verbindungsstelle verbunden ist, und ein drittes Abzweigrohr (226), aufweisend ein distales Ende, das mit dem Wasserauslassrohr (230) verbunden ist, und ein proximales Ende, das mit der Verbindungsstelle verbunden ist, und
mindestens ein Ventil (242, 252), das in der Drei-Wege-Verbindungsrohrverschraubung (220) platziert und ausgelegt ist, um wechselweise einen ersten Strömungsweg von dem Filterausgangsrohr (208) durch das erste Abzweigrohr (222) und die Verbindungsstelle zu öffnen und zu schließen,
wobei das mindestens eine Ventil (242, 252) ausgelegt ist, um, getrieben durch die Kraft des Wassers, das von dem Steuerkasten (200) zum Massagebecken (100) strömt und von der Filterwasserpumpeneinheit oder von der Massagewasserpumpeneinheit gepumpt wird, je nachdem, ob der Steuerkasten jeweils auf einen Filtermodus oder einen Massagemodus eingestellt ist, von einer Position in eine andere zu wechseln.

2. Steuerkasten nach Anspruch 1, wobei das mindestens eine Ventil ein erstes Schwingrückschlagklappenventil (242) ist, umfassend: eine erste Schwenkwelle (244), eine erste Ventilklappe (246), die rund um die erste Schwenkwelle (244) schwenkbar ist, und einen ersten Ventilsitz.

3. Steuerkasten nach Anspruch 1, wobei:
das mindestens eine Ventil mindestens entweder in dem Filterausgangsrohr (208), dem Massageausgangsrohr (218) oder der Drei-Wege-Verbindungsrohrverschraubung (220) angeordnet ist, und
das mindestens eine Ventil ausgelegt ist, um wechselweise den ersten Strömungsweg zu öffnen und von dem Massageausgangsrohr (218) durch das zweite Abzweigrohr (224) einen zweiten Strömungsweg zu öffnen.

4. Steuerkasten nach Anspruch 3, wobei das mindestens eine Ventil Folgendes umfasst:
ein erstes Schwingrückschlagklappenventil (242), das an einer Verbindung zwischen dem Filterausgangsrohr (208) und dem ersten Abzweigrohr (222) angeordnet ist, und
ein zweites Schwingrückschlagklappenventil, das an einer Verbindung zwischen dem Massageausgangsrohr (218) und dem zweiten Abzweigrohr (224) angeordnet ist.

5. Steuerkasten nach Anspruch 2, wobei das erste Schwingrückschlagklappenventil (242) an einer Verbindung zwischen dem Filterausgangsrohr (208) und dem ersten Abzweigrohr (222) angeordnet ist.

6. Steuerkasten nach Anspruch 3, wobei das mindestens eine Ventil ein Hubventil (252) ist, umfassend: einen Ventilschaft (254), eine Ventilklappe (256), die in der Lage ist, sich entlang des Ventilschafts (254) hin und her zu bewegen, und einen Ventilsitz (258).

7. Steuerkasten nach Anspruch 1, wobei eine Höhe, an der das Wasserauslassrohr (230) angeordnet ist, größer oder gleich Höhen ist, an denen das Filterausgangsrohr (208), das Massageausgangsrohr (218) und die Drei-Wege-Verbindungsrohrverschraubung (220) angeordnet sind.

8. Steuerkasten nach Anspruch 1, wobei der Steuerkasten (200) ferner eine Luftpumpeneinheit umfasst, umfassend einen Luftpumpenkörper (264) und ein Luftpumpenausgangsrohr (268), wobei das Luftpumpenausgangsrohr (268) ausgelegt ist, um mit einer Lufteinlassleitung des Massagebeckens (100) verbunden zu werden.

9. Steuerkasten nach Anspruch 1, ferner umfassend eine Heizung (270), die mit dem Filterausgangsrohr (208) verbunden ist.

10. Massagebecken, umfassend den Steuerkasten nach einem der Ansprüche 1 bis 9.

## Revendications

1. Boîte de commande d'un bassin de massage, la boîte de commande comprenant :
une unité de pompe à eau de filtrage comprenant : un corps de pompe à eau de filtrage (204) dans lequel l'eau provenant d'un bassin de massage (100) s'écoule, un tuyau d'entrée d'eau de filtrage (206) raccordé entre le bassin de massage (100) et le corps de pompe à eau de filtrage (204) et à travers lequel l'eau s'écoule depuis le bassin de massage (100) dans le corps de pompe à eau de filtrage (204), et un tuyau de sortie de filtrage (208) vers lequel l'eau est pompée par le corps de pompe à eau de filtrage (204) pour refluer vers le bassin de massage (100) à travers un tuyau de sortie d'eau (230) ;
une unité de pompe à eau de massage comprenant : un corps de pompe à eau de massage (214) dans lequel l'eau provenant du bassin de massage (100) s'écoule, un tuyau d'entrée d'eau de massage (216) raccordé entre le bassin de massage (100) et le corps de pompe à eau de massage (214) et à travers lequel l'eau s'écoule depuis le bassin de massage (100) dans le corps de pompe à eau de massage (214), et un tuyau de sortie de massage (218) vers lequel l'eau est pompée par le corps de pompe à eau de massage (214) pour refluer vers le bassin de massage (100) à travers le tuyau de sortie d'eau (230) ;
ledit tuyau de sortie d'eau (230) étant configuré pour sortir de l'eau provenant de l'unité de pompe à eau de filtrage ou de l'unité de pompe à eau de massage vers le bassin de massage (100) ;
un raccord de tuyau de raccordement à trois voies (220) comprenant : un premier tuyau de dérivation (222) ayant une extrémité distale raccordée au tuyau de sortie de filtrage (208) et une extrémité proximale raccordée à une jonction du raccord de tuyau de raccordement à trois voies (220), un deuxième tuyau de dérivation (224) ayant une extrémité distale raccordée au tuyau de sortie de massage (218) et une extrémité proximale raccordée à la jonction, et un troisième tuyau de dérivation (226) ayant une extrémité distale raccordée au tuyau de sortie d'eau (230) et une extrémité proximale raccordée à la jonction ; et
au moins une vanne (242, 252) placée à l'intérieur du raccord de tuyau de raccordement à trois voies (220) et configurée pour ouvrir et fermer alternativement un premier parcours d'écoulement depuis le tuyau de sortie de filtrage (208) à travers le premier tuyau de dérivation (222) et la jonction,
dans laquelle ladite au moins une vanne (242, 252) est configurée pour passer d'une position à une autre poussée par la force de l'eau s'écoulant depuis la boîte de commande (200) vers le bassin de massage (100) et pompée depuis l'unité de pompe à eau de filtrage ou depuis l'unité de pompe à eau de massage selon que la boîte de commande est réglée respectivement sur un mode de filtrage ou sur un mode de massage.

2. Boîte de commande selon la revendication 1, dans laquelle la au moins une vanne est un premier clapet anti-retour unidirectionnel (242) de contrôle d'oscillation comprenant : un premier arbre de pivotement (244), un premier claquement de vanne (246) pouvant pivoter autour du premier arbre de pivotement (244), et un premier siège de vanne.

3. Boîte de commande selon la revendication 1, dans laquelle :
la au moins une vanne est disposée dans au moins l'un du tuyau de sortie de filtrage (208), du tuyau de sortie de massage (218) et du raccord de tuyau de raccordement à trois voies (220) ; et
la au moins une vanne est configurée pour ouvrir alternativement le premier parcours d'écoulement et ouvrir un second parcours d'écoulement depuis le tuyau de sortie de massage (218) à travers le deuxième tuyau de dérivation (224).

4. Boîte de commande selon la revendication 3, dans laquelle la au moins une vanne comprend :
un clapet anti-retour unidirectionnel (242) de contrôle de pivotement disposée au niveau d'une connexion entre le tuyau de sortie de filtrage (208) et le premier tuyau de dérivation (222) ; et
un second clapet anti-retour de contrôle de pivotement disposé au niveau d'une connexion entre le tuyau de sortie de massage (218) et le deuxième tuyau de dérivation (224).

5. Boîte de commande selon la revendication 2, dans laquelle le clapet anti-retour unidirectionnel (242) de contrôle de pivotement est disposée au niveau d'un raccordement entre le tuyau de sortie de filtrage (208) et le premier tuyau de dérivation (222).

6. Boîte de commande selon la revendication 3, dans laquelle la au moins une vanne est une vanne à levée (252) comprenant : une tige de vanne (254), un claquement de vanne (256) capable d'effectuer un mouvement de va-et-vient le long de la tige de vanne (254), et un siège de vanne (258).

7. Boîte de commande selon la revendication 1, dans laquelle une hauteur à laquelle le tuyau de sortie d'eau (230) est disposé est supérieure ou égale aux hauteurs à laquelle le tuyau de sortie de filtrage (208), le tuyau de sortie de massage (218) et le raccord de tuyau de raccordement à trois voies (220) sont disposés.

8. Boîte de commande selon la revendication 1, dans laquelle la boîte de commande (200) comprend en outre une unité de pompe à air comprenant un corps de pompe à air (264) et un tuyau de sortie de pompe à air (268), le tuyau de sortie de pompe à air (268) étant configuré pour être raccordé à un conduit d'entrée d'air du bassin de massage (100).

9. Boîte de commande selon la revendication 1, comprenant en outre un dispositif de chauffage (270) raccordé au tuyau de sortie de filtrage (208).

10. Bassin de massage, comprenant la boîte de commande selon l'une des revendications 1 à 9.
